# EUROPÄISCHE PATENTSCHRIFT

(11) **EP 3 047 766 B1**
(45) Veröffentlichungstag und Bekanntmachung des Hinweises auf die Patenterteilung: **12.02.2020**
(21) Anmeldenummer: 15202880.9
(22) Anmeldetag: 29.12.2015
(51) Int. Cl.: A47J 31/36, A47J 31/44

(54) **BRÜHEINHEIT FÜR EINE KAPSELGETRÄNKEMASCHINE**
BREWING UNIT FOR A CAPSULE BEVERAGE MACHINE
UNITE D'ECHAUDAGE POUR UNE MACHINE DE PREPARATION DE BOISSONS EN CAPSULE

(30) Priorität: 26.01.2015 DE 102015201220
(43) Veröffentlichungstag der Anmeldung: 27.07.2016
(73) Patentinhaber: BSH Hausgeräte GmbH, 81739 München (DE)
(72) Erfinder: Winkler, Gerhard, 83334 Inzell (DE); Höglauer, Michael, 83246 Unterwössen (DE); Steffl, Michael, 83250 Marquartstein (DE); Fritz, Jürgen, 84553 Halsbach (DE); Steininger, Benedikt, 83122 Samerberg (DE)

(56) Entgegenhaltungen:
- EP-A1- 2 910 155
- EP-B1- 1 715 778
- WO-A1-2011/018363
- DE-A1-102010 044 945

## Beschreibung

Die Erfindung betrifft einen Brühkopf einer Heißgetränkemaschine für Haushaltszwecke mit einer Brühkammer zur Aufnahme einer Getränkesubstratkapsel aus einem bewegbaren Brühkammerteil, um eine Kapsel in die Brühkammer einzusetzen, und einem feststehenden Brühkammerteil, mit zumindest einer Anstechvorrichtung für die Kapsel in einem ersten Brühkammerkammerteil und mit zumindest einem mit der Anstechvorrichtung zusammenwirkenden Stößel im anderen, dem zweiten Brühkammerteil als Widerlager der Kapsel beim Anstechen und Abdichten.

Einen derartigen Brühkopf einer Heißgetränkezubereitungseinrichtung zeigt die WO 2011 121 125 A1. Sie ist in verhältnismäßig engen Grenzen an die Abmessungen der verwendbaren Getränkekapseln gebunden und bietet nur einen geringfügigen Toleranzausgleich. Dies kann bei einem unaufmerksamen Einsetzen der Kapsel zu Störungen der Zubereitungseinrichtung führen. Ein gattungsgemäßer Brühkopf ist ebenfalls aus der EP 1 715 778 B1 bekannt.

Die EP 2 910 155 A1 und DE 10 2010 044 945 A1 offenbaren ein erstes und ein zweites Brühkammerelement, wobei das erste Brühkammerelement ein Perforationselement aufweist. Das Perforationselement ist mittels einer Schraube am ersten Brühkammerelement befestigt.

Schließlich offenbart noch die WO 2011/018363 A1 ein System zum Erzeugen eines Brühgetränks aus einer Getränkekapsel. Das System umfasst ein oberes Brühkammerteil mit Stechmitteln und ein unteres Brühkammerteil mit einer Bodenwand und einer Seitenwand. Während der Erzeugung eines Brühgetränk wird das untere Brühkammerteil über eine Druckeinrichtung gegen das feststehende obere Brühkammerteil gedrückt. Der Druck erfolgt manuell über einen Hebel.

Es ist daher Aufgabe der Erfindung, einen Brühkopf anzugeben, der einen größeren Toleranzausgleich bietet.

Diese Aufgabe wird bei einem eingangs genannten Brühkopf erfindungsgemäß dadurch gelöst, dass er einen gegenüber dem zweiten Brühkammerteil verstellbaren Stößel umfasst. Die Verstellbarkeit des Stößels gegenüber dem zweiten Brühkammerteil ist in dem Sinne zu verstehen, dass der Stößel relativ zum zweiten Brühkammerteil oder gegenüber dessen Bestandteilen, beispielsweise einem zwischengeschalteten Träger oder Innentopf gegenüber, individuell verstellbar ist. Mit dem Entfall beispielsweise eines gemeinsamen Trägers kann das zweite Brühkammerteil zudem kompakter ausgebildet werden, sodass die Verstellbarkeit des Stößel nicht zu größeren Bauteilabmessungen des zweiten Brühkammerteils führen muss.

Seine Verstellbarkeit bedeutet eine gewisse Beweglichkeit des Stößels dem zweiten Brühkammerteil gegenüber, wirkt sich aber vorteilhaft insbesondere gegenüber dem ersten Brühkammerteil aus. Denn als Widerlager für die Kapsel beim Anstechen sollte der Stößel idealerweise axial mit der Anstechvorrichtung fluchten, um die Substratkapsel zuverlässig und satt in Dichtungen im Bereich der Anstechvorrichtung zu drücken. Dies gelingt jedenfalls bei einer Schwenkbewegung der Brühkammerteile relativ zueinander regelmäßig erst in einer Endposition des Anstechvorgangs. Davon kann die Dichtigkeit zwischen der Substratkapsel und der Brühkammer beeinflusst werden. Da die Dichtigkeit vor allem vom Anpressdruck der Kapsel zwischen dem Stößel und der Anstechvorrichtung abhängig, also zunächst toleranz- bzw. fertigungsabhängig ist, kann die Verstellbarkeit des Stößels einen gewissen Toleranzausgleich schaffen. Denn die Verstellbarkeit des Stößels kann für eine satte Anlage der Substratkapsel zwischen der Dichtung der Anstechvorrichtung und dem Stößel sorgen. Der Toleranzausgleich des Stößels kann die Herstellungskosten des Brühkopfs reduzieren, weil jener im Übrigen mit größeren Toleranzen und daher weniger aufwändig produziert werden kann.

Ein Brühkopf für Kapselmaschinen umfasst regelmäßig zwei Anstechvorrichtungen, nämlich eine regelmäßig exzentrisch angeordnete erste Anstechvorrichtung als Fluideinlass in die Kapsel und eine regelmäßig zentral angeordnete zweite Anstechvorrichtung als Fluidauslass für das hergestellte Getränk aus der Kapsel. Nach einer vorteilhaften Ausgestaltung der Erfindung kann zumindest ein mit der ersten oder mit der zweiten Anstechvorrichtung korrespondierender verstellbarer Stößel im zweiten Brühkammerteil angeordnet sein. Dadurch können die Andruckverhältnisse im Bereich der Anstechvorrichtungen jeweils separat beeinflusst werden. In einer aufwändigeren Ausgestaltungsform der Erfindung kann jeweils ein mit der ersten bzw. mit der zweiten Anstechvorrichtung korrespondierender verstellbarer Stößel vorgesehen sein. Ein erster Stößel ist demnach der ersten Anstechvorrichtung und ein weiterer zweiter Stößel der zweiten Anstechvorrichtung zugeordnet. Während die Anstechvorrichtungen in aller Regel im feststehenden ersten Brühkammerteil angeordnet sind, befinden sich die Stößel im zweiten, beweglichen Brühkammerteil. Je satter die Kapsel in die Dichtungen - insbesondere an der einlaufseitigen ersten Anstechvorrichtung - gedrückt wird, umso dichter kann die fluidische Verbindung zwischen dem Brühkopf und der Substratkapsel ausfallen und umso weniger Druckverlust kann die Getränkezubereitung beeinträchtigen. Je stärker dagegen der Anpressdruck an der auslaufseitigen zweiten Anstechvorrichtung ausfällt, desto vorteilhafter kann die Luftzufuhr beim Getränkeauslauf verändert werden, der für eine Erzeugung von Crema erforderlich ist, und umso feinblasiger kann die entstehende Crema ausfallen. Mit der Verstellbarkeit des Stößels der einlaufseitigen Anstechvorrichtung lässt sich folglich die Dichtigkeit der Kapsel gegenüber der Brühkammer einstellen oder ggf. nachstellen, mit der Verstellbarkeit des Stößels der Auslaufanstechvorrichtung dagegen kann Einfluss auf die Qualität der Cremabildung genommen werden.

Grundsätzlich kann die Verstellbarkeit des Stößels eine manuelle definierte Verstellung ermöglichen oder eine weitgehend selbsttägige Einstellung erlauben. Nach einer weiteren vorteilhaften Ausgestaltung der Erfindung kann der oder jeder Stößel am zweiten Brühkammerteil schwimmend gelagert sein. Eine schwimmende Lagerung bedeutet, dass sich der Stößel in einem engen Rahmen in seiner Lagerung bewegen kann. Diese Maßnahme erlaubt eine gewisse Anpassung an die Gestaltung und Abmessung der Kapsel bzw. einen gewissen Toleranzausgleich, ohne dass ein Benutzer dafür eingreifen müsste. Sie erfolgt also weitgehend unbemerkt, was dem Bedienungskomfort der Heißgetränkezubereitungseinrichtung einerseits und den günstigeren Herstellungskosten andererseits aufgrund der dadurch höheren Fertigungstoleranzen zugute kommt.

Nach einer weiteren vorteilhaften Ausgestaltung der Erfindung kann der Stößel in einer Druckrichtung schwimmend gelagert sein. Während des Schließens der Brühkammer wird der Stößel um einen geringen Betrag von wenigen Millimetern vorgespannt. Damit bietet er einen Toleranzausgleich bei Kapseln unterschiedlicher Höhe, was zu nur geringen Druckunterschieden führt. Alternativ oder zusätzlich dazu kann er in einer zur Druckrichtung orthogonalen Richtung schwimmend gelagert sein. Damit ermöglicht er einen Toleranzausgleich bei unterschiedlich geformten Kapseln, deren Passgenauigkeit weniger gut sein muss, oder bei einem gewissen seitlichen Versatz der Kapsel in der Brühkammer. Dadurch lassen sich auch die Herstellungskosten der Kapsel reduzieren. Maschinenseitig bietet ein Toleranzausgleich in einer zur Druckrichtung orthogonalen Richtung eine Optimierung der Kontaktflächen zwischen der Kapsel einerseits und der Anstechvorrichtung andererseits.

Nach einer weiteren vorteilhaften Ausgestaltung der Erfindung kann der Stößel über eine schwimmende Lagerung in einer Kipprichtung verfügen. Sie erlaubt dem Stößel eine gewisse Schwenkmöglichkeit in einem geringen Winkelbereich. Auch dadurch lässt sich eine Optimierung der Kontaktflächen erzielen, weil der Stößel als Widerlager der Anstechvorrichtung bei einem schwenkbaren zweiten Brühkammerteil nicht koaxial mit der Anstechvorrichtung auf die Kapsel abgesenkt wird, sondern in einer Kreisbahn. Lässt seine schwimmende Lagerung eine gewisse Verkippung des Stößels zu, so erhält er frühzeitig einen vollflächigen Kontakt an der Kapsel, womit er beschädigungsfrei als Widerlager für die Anstechvorrichtung wirken kann.

Nach einer weiteren vorteilhaften Ausgestaltung der Erfindung kann der Brühkopf über eine elastische Lagerung des Stößels im zweiten Brühkammerteil verfügen. Die schwimmende Lagerung des Stößels ergibt sich also aus seiner elastischen Lagerung, beispielsweise durch ein Elastomer oder eine Feder. Als Federn erscheinen dafür Schrauben- oder Tellerfedern geeignet. Ist der Stößel beispielsweise als zylindrischer Kunststoffdom ausgebildet, der innerhalb des Brühkammerteils verstellbar gelagert ist, kann er vorteilhaft über eine innenliegende Schraubenfeder verfügen. Insbesondere bei Schraubenfedern mit großen Einbaulängen lassen sich flache Elastizitätskennlinien bzw. flache Federkennlinien erreichen, denen bei unterschiedlichen Kompressionslängen weitgehend gleiche Druckkräfte gegenüber stehen. Insoweit führen beispielsweise unterschiedlich hohe Kapseln nur zu geringen Kraftunterschieden in Druckrichtung. Auch bei unterschiedlichen Kapselhöhen lassen sich dadurch dennoch Getränke mit weitgehend gleicher Qualität herstellen.

Nach einer weiteren vorteilhaften Ausgestaltung der Erfindung können der Stößel der ersten Anstechvorrichtung einerseits und der Stößel der zweiten Anstechvorrichtung andererseits über eine elastische Lagerung mit unterschiedlicher Federhärte verfügen. Werden die Stößel mit unterschiedlichen Kräften beaufschlagt, kann sich dies positiv auf die Bedienkräfte einerseits und auf die Getränkequalität andererseits auswirken. Denn dank der separaten Verstellbarkeit der Stößel können sie erfindungsgemäß individuell und kompromisslos auf ihre jeweiligen Anforderungen hin ausgelegt werden, der einlaufseitige Stößel also genau auf die dort erforderlichen Anpresskräfte der Substratkapsel in die Dichtungen, der auslaufseitige Stößel dagegen auf eine geeignete Luftzufuhr hin.

Nach einer zur selbsttägigen Einstellung des Stößels alternativen Ausgestaltung der Erfindung kann der Brühkopf eine werkseitige oder benutzerseitige Verstellbarkeit des Stößels bieten. Dadurch kann sich der Stößel in engem Rahmen in einer von mehreren festen Positionen wählbar einstellen lassen. Die Verstellbarkeit kann in Druckrichtung, in einer Verschieberichtung orthogonal zur Druckrichtung oder in einer Winkelposition möglich sein. Eine werkseitige Verstellbarkeit kann ebenfalls dem Toleranzausgleich dienen. Eine benutzerseitige Verstellbarkeit kann jedenfalls bei einer axialen bzw. bei einer Verstellbarkeit des Stößels in Druckrichtung die Möglichkeit zur Beeinflussung der Getränkequalität bieten. Denn wie bereits erwähnt kann durch einen höheren Druck im Bereich der Anstechvorrichtung des Einlasses ein dortiger eventueller Druckverlust reduziert werden. Mit einem höheren Druck auf die Anstechvorrichtung des Auslasses dagegen lässt sich eine feinblasigere Crema erreichen. Mit der Manipulationsmöglichkeit des Stößels bietet der erfindungsgemäße Brühkopf einen höheren Komfort.

Nach einer weiteren vorteilhaften Ausgestaltung der Erfindung kann die gezielte Verstellbarkeit durch eine Verschraubung als verstellbare Halterung des Stößels im zweiten Brühkammerteil ausgebildet sein. Dazu kann beispielsweise ein zylindrischer Stößel ein Außengewinde aufweisen, das mit einem Innengewinde im zweiten Brühkammerteil kämmt. Damit kann der Stößel durch Drehung um seine Achse relativ zum zweiten Brühkammerteil verstellt werden. Für eine nur gelegentliche Verstellung kann sie von einer Innenseite der Brühkammer aus zugänglich sein, für eine komfortablere und ggf. häufigere Verstellung kann sie an dem Brühkammerteil außenseitig zugänglich sein. Sie kann sich damit auch benutzerseitig leicht bedienen lassen und ggf. derart ausgebildet sein, dass dafür kein Werkzeug erforderlich ist.

Nach einer dazu alternativen Ausgestaltungsform der Erfindung kann die Verstellbarkeit in einer Klemmung als verstellbare Halterung des Stößels im zweiten Brühkammerteil ausgeformt sein. Da sie unter Umständen weniger leicht zu bedienen und einzustellen ist, eignet sie sich vor allem für eine werkseitige Verstellbarkeit des Stößels.

Nach einer weiteren vorteilhaften Ausgestaltungsform der Erfindung kann der Stößel sowohl über eine schwimmende Lagerung als auch über eine verstellbare Halterung verfügen. Damit kann sich die Position des Stößels einerseits gezielt manipulieren lassen, um Druckverluste oder die Getränkequalität gezielt zu beeinflussen. Andererseits lässt sich durch die schwimmende Lagerung ein gewisser Toleranzausgleich erreichen, so dass die gewählte Verstellung auch bei unterschiedlichen Kapseln zuverlässig zu dem gewünschten Getränkeergebnis führt.

Nach einer weiteren vorteilhaften Ausgestaltungsform der Erfindung können die zwei Stößel auf einem gemeinsamen Träger innerhalb des zweiten Brühkammerteils angeordnet sein, der über eine manuelle Verstellbarkeit verfügt. Mit einer schwimmenden Einzellagerung der Stößel kann die Verstellbarkeit beider Stößel dadurch mit geringerem Konstruktions- und Herstellungsaufwand als bei einer jeweiligen schwimmenden und verstellbaren Lagerung beider Stößel erzielt werden.

Das Prinzip der Erfindung wird im Folgenden anhand einer Zeichnung beispielshalber noch näher erläutert. In der Zeichnung zeigen:
- Figur 1:: eine Draufsicht für einen erfindungsgemäßen Brühkopf,
- Figur 2:: eine Schnittansicht durch den Brühkopf entlang der Schnittlinie II - II in Figur 1,
- Figur 3:: eine Schnittansicht gemäß der Schnittlinie III - III in Figur 1.

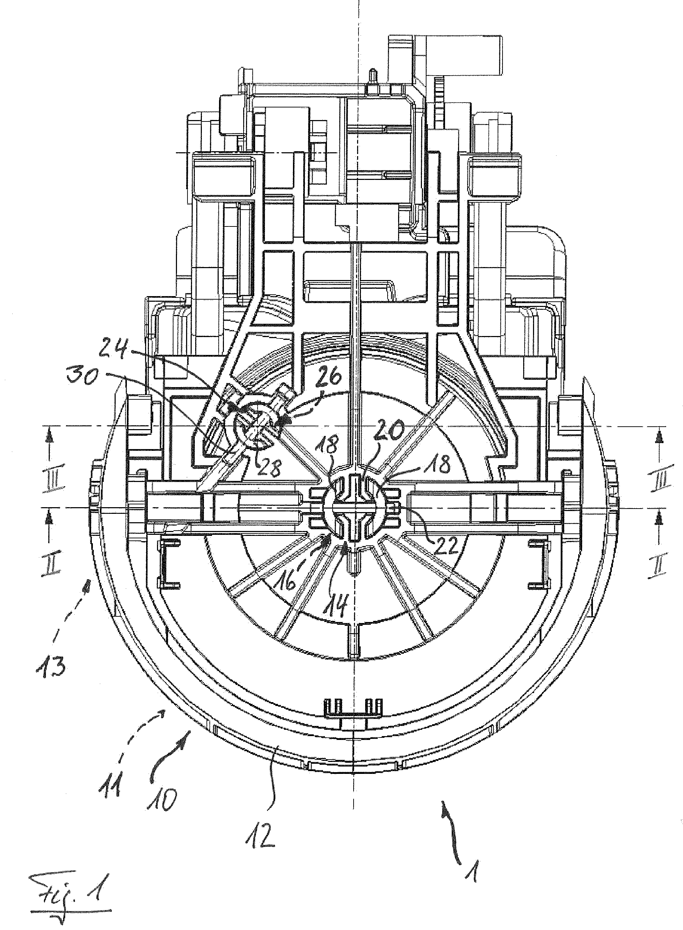

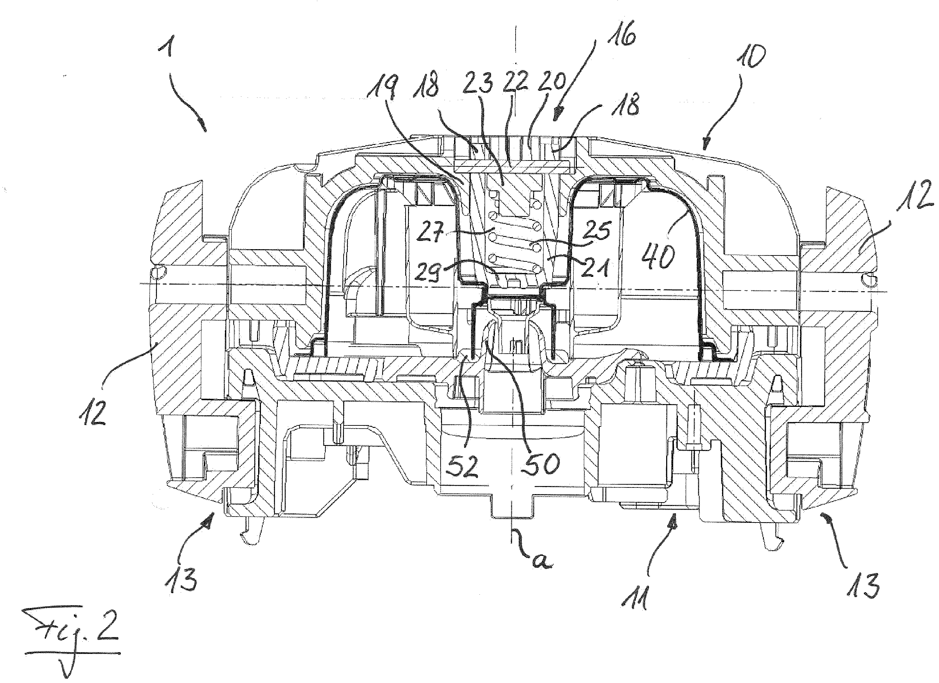

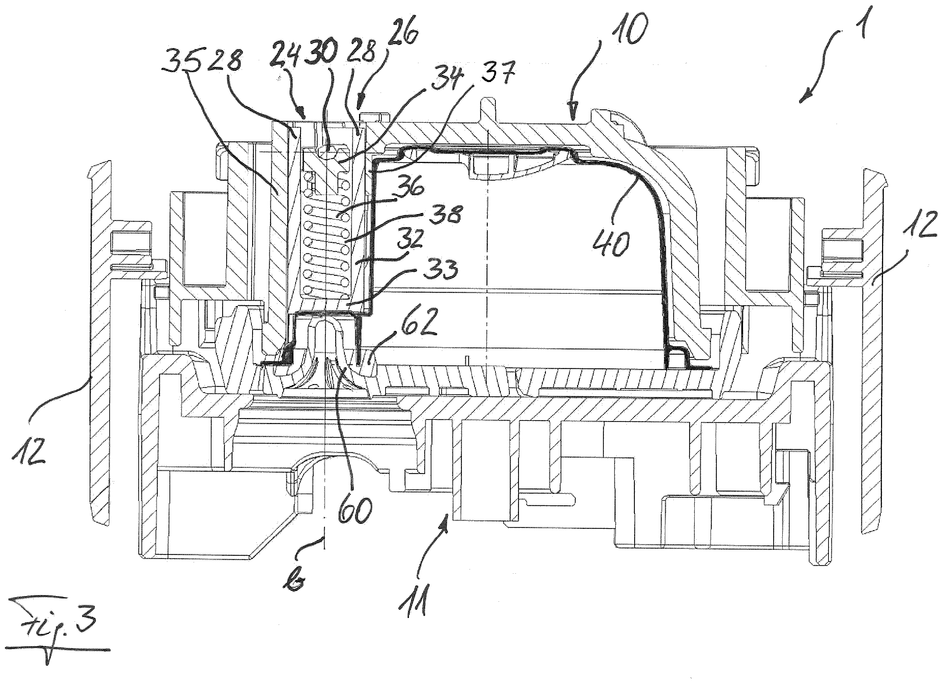

Die Figur 1 bietet eine Draufsicht auf einen oberseitig unverkleideten Brühkopf 1 bzw. auf ein schwenkbares Brühkammeroberteil 10. Es ist zu mehr als der Hälfte seines kreisrunden Umfangs von einem Betätigungsgriff 12 umgeben, der zugleich ein Bestandteil einer Verriegelungseinrichtung 13 (siehe Figur 2 und 3) des Brühkammeroberteils 10 mit einem in dieser Ansicht nicht erkennbaren Brühkammerunterteil 11 darstellt. In einem geometrischen Zentrum des Brühkammeroberteils 10 ist der Fuß 14 eines erst in Figur 2 gezeigten zylindrischen Stößels 16 zu erkennen. Der Fuß 14 besteht aus zwei halben Zylindersegmentschalen 18, die zwischen sich einen feststehenden Steg 20 als Bestandteil des Brühkammeroberteils 10 einschließen. Die beiden Schalen 18 sind außerdem mittig, horizontal und rechtwinklig zur Erstreckungsrichtung des Stegs 20 von einem zylindrischen Stift 22 durchsetzt, der sich auf dem Steg 20 abstützt.

Vom zentralen Stößel 16 aus betrachtet exzentrisch und in der Ansicht der Figur 1 links oben befindet sich ein weiterer Stößel 26, der vollständig erst in Figur 3 zu erkennen ist. Auch von ihm ist nur ein Fuß 24 zu erkennen, der ebenfalls aus zwei halben Zylindersegmenthalbschalen 28 besteht. Auch er ist in gleicher Weise wie der Stößel 16 am Brühkammeroberteil 10 befestigt: Die Halbschalen 28 durchsetzt zentral ein zylindrischer Stift 30, der sich auf einem rechtwinklig zu ihm zwischen den Halbschalen 28 verlaufenden Steg 31 abstützt.

Die Stößel 16, 26 korrespondieren mit in den Figuren 2 und 3 gezeigten Anstechvorrichtungen 50, 60 im Brühkammerunterteil 11: Figur 2 zeigt einen Schnitt gemäß der Schnittlinie II-II in Figur 1, also durch ein geometrisches Zentrum durch den Brühkopf 1 hindurch. Er setzt sich aus dem Brühkammeroberteil 10 und einem Brühkammerunterteil 11 zusammen, die über das Betätigungselement 12 und dem daran angebundenen Verriegelungsmechanismus 13 miteinander gekoppelt sind. Sie schließen zwischen sich eine zylindrische Brühkammer ein, die eine Kapsel 40 ausfüllt, die zwischen dem Brühkammeroberteil 10 und dem Brühkammerunterteil 11 eingespannt ist. In der geometrischen Mitte des Brühkammeroberteils 10 und auf einer Mittelachse a befindet sich der Stößel 16, der zu einer Oberseite hin in den zwei Halbschalen 18 ausläuft. Zwischen ihnen liegt ein T-förmiger Fuß 23, auf dem eine Schraubenfeder 25 aufgesteckt ist. Sowohl der T-förmige Fuß 23 als auch die Schraubenfeder 25 befinden sich in einem zylindrischen Hohlraum 27 des Stößels 16. Er wird umgeben von einem Zylindermantel 21, der in einer unteren Hälfe außenseitig abwärts leicht konisch zuläuft und in einer tellerförmigen Stirnplatte 29 mündet. Er steckt mit seiner oberen, zylindrischen Hälfte in einer rohrförmigen Hülse 19, die Bestandteil des Brühkammeroberteils 10 ist und ihn axial führt. Die Schraubenfeder 25 stützt sich auf der Innenseite der Stirnplatte 29 ab. Damit steht der Stößel 16 unter einer abwärts und auf das Brühkammerunterteil 11 hin gerichteten Richtung unter Vorspannung, die über den Fuß 23 auch auf den Stift 22 drückt. Damit ist gewährleistet, dass sich der Stift 22 nicht ungewollt aus seiner Lage entfernt und so den Stößel 16 aus seiner Halterung im Brühkammeroberteil 10 löst.

Auf derselben vertikalen Mittelachse a wie der Stößel 16 liegt auch eine zentrale Anstechvorrichtung 50, die Bestandteil des Brühkammerunterteils 11 ist. Sie ist als schräg angeschnittener, aufwärts konisch zulaufender Hohldorn ausgebildet und durchstößt beim bestimmungsgemäßen Einsatz einer Kapsel 40 in den Brühkopf 1 und bei dessen Schließvorgang eine nicht dargestellte Versiegelung der Kapsel 40. Sie ist von einer ringförmigen elastischen Dichtung 52 umgeben, in die die Kapsel 40 bei verschlossenem Brühkopf 1 fluiddicht eingedrückt wird und die sich dabei verformt (nicht dargestellt). Damit stellt die Anstechvorrichtung 50 eine fluiddichte Verbindung zwischen dem Brühkopf 1 und dem Innenraum der Kapsel 40 her und dient als Getränkeauslass. Der Stößel 16 dient als Widerlager der Anstechvorrichtung 50, das beim Absenken des Brühkammeroberteils 10 auf das Brühkammerunterteil 11 die Kapsel 40 auf die Anstechvorrichtung 50 presst. Der Stößel 16 trägt damit nicht nur dazu bei, die Versiegelung der Kapsel 40 zuverlässig zu durchstoßen, sondern auch zu einer fluiddichten Verbindung der Kapsel 40 gegenüber dem Brühkammerunterteil 11.

Nach weitgehend dem gleichen Prinzip ist gemäß Figur 3 die weitere, bezüglich der Mittelachse a exzentrisch angeordnete Anstechvorrichtung 60 ausgebildet. Auch sie ist als aufwärts gerichteter, schräg angeschnittener Hohldorn ausgebildet und von einer ringförmigen Dichtung 62 umgeben. Sie dient einlaufseitig der Zufuhr von heißem Wasser in die Kapsel 40. Bei verschlossenem Brühkopf drückt sich die Kapsel 40 in die Dichtung 62 ein und verformt sie (ebenfalls nicht dargestellt), um eine fluiddichte Verbindung zwischen der Anstechvorrichtung 60 und der Kapsel 40 zu gewährleisten.

Bei geschlossenem Brühkopf 1 befindet sich der Stößel 26 im Brühkammeroberteil 10 koaxial mit der Anstechvorrichtung 60 im Brühkammerunterteil 11. Er ist hohlzylindrisch ausgebildet und besteht aus einem zylinderförmigen Mantel 32, der am oberen Ende in die Halbschalen 28 ausläuft und am unteren Ende in eine Stirnplatte 33 mündet. Die Halbschalen 28 sind von dem in Figur 3 schräg geschnittenen Stift 30 durchbrochen, auf dem ein T-förmiger Fuß 34 sitzt, zwischen dem und der Stirnplatte 33 eine Schraubenfeder 36 eingespannt ist. Sie befindet sich mit dem Fuß 34 in einem Hohlraum 38 des Stößels 26. Der Mantel 32 liegt im dargestellten Schnitt II-II linksseitig an einer Wand 35 und rechtsseitig an einem Kragen 37 an, beides Bestandteile des Brühkammeroberteils 10. Sie umgeben den Stößel 26 jeweils halbkreisförmig. Damit ist der Stößel 26 entlang seiner Rotations- und Erstreckungsachse b verschiebbar geführt und gelagert.

Nach dem Einsetzen einer Kapsel 40 in den Brühkopf 1, regelmäßig durch Ablegen auf dem Brühkammerunterteil 11, wird der Brühkopf 1 verschlossen, indem das Brühkammeroberteil 10 auf das Brühkammerunterteil 11 abgesenkt wird. Dies geschieht durch eine rotatorische Bewegung, so dass das Brühkammeroberteil 10 gegenüber dem Brühkammerunterteil 11 eine Kreisbogenbewegung beschreibt. Damit es dadurch oder wegen unterschiedlicher Geometrien der Kapseln 40 beispielsweise aufgrund von Fertigungstoleranzen nicht zu Komplikationen im Zusammenspiel zwischen den Stößeln 16, 26 und den Anstechvorrichtungen 50, 60 kommt, sind die Stößel 16, 26 vertikal verschiebbar und gefedert gelagert: Sie bieten eine Anpassungsmöglichkeit bzw. eine gewisse Nachgiebigkeit, indem ihnen bzw. ihren Stirnplatten 29, 33 ein gewisser Verschiebeweg von wenigen Millimetern, nämlich von 1 bis 2 Millimetern, möglich ist. Auch bei unterschiedlich hohen Kapseln 40 führen unterschiedliche Verschiebewege innerhalb dieser Grenzen zu weitgehend den gleichen Betätigungskräften, weil insbesondere die Schraubenfeder 36 über eine große Einbaulänge und damit über eine flache Federkennlinie verfügt. Benutzerseitig machen sich demzufolge unterschiedlich hohe Kapseln bei der Betätigung des Brühkopfes 1 nicht bemerkbar. Durch die jeweils separate Federlagerung der Stößel 16, 26 können ihre Betätigungskräfte individuell auf die unterschiedlichen Funktionen als Widerlager für die Anstechvorrichtung 50 des Auslaufs einerseits und für die Anstechvorrichtung 60 des Einlaufs andererseits ausgelegt werden. Dadurch lässt sich neben den Bedienkräften außerdem Einfluss auf die Getränkequalität nehmen. Denn für eine höhere Anpresskraft der Kapsel 40 im Bereich der Anstechvorrichtung 50, um dort eine Luftzufuhr zu verringern und damit die Cremaqualität zu verbessern, braucht eine Anpresskraft des Stößels 26 im Bereich der Anstechvorrichtung 60 im Einlaufbereich nicht erhöht zu werden. Schließlich führt die getrennte Federlagerung der Stößel 16, 26 zu einer geringeren Bauhöhe des Brühkammeroberteils 10, weil die Stößel 16, 26 nicht auf einem gemeinsamen federgelagerten Träger montiert werden müssen, dessen Federweg die Abmessungen des Brühkammeroberteils 10 ungünstig vergrößern könnte.

Da es sich bei de vorhergehenden, detailliert beschriebenen Brühkopf um ein Ausführungsbeispiel handelt, kann er in üblicher Weise vom Fachmann in einem weiten Umfang modifiziert werden, ohne den Bereich der Erfindung zu verlassen. Insbesondere können auch die konkreten Ausgestaltungen der Befestigung und der Führung der Stößel in anderer Form als in der hier beschriebenen erfolgen. Ebenso kann die Anordnung der Stößel und der Anstechvorrichtungen in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Brühkopf
- 10: Brühkammeroberteil
- 11: Brühkammerunterteil (vergessen)
- 12: Betätigungsgriff
- 13: Verrieglungsmechanismus
- 14: Fußbereich
- 16: Stößel
- 18: Halbschalen
- 19: Hülse
- 20: Steg
- 21: Zylindermantel
- 22: Stift
- 23: T-förmiger Fuß
- 24: Fußbereich
- 25: Schraubenfeder
- 26: Stößel
- 27: Hohlraum
- 28: Halbschalen
- 29: Stirnplatte
- 30: Stift
- 32: Zylindermantel
- 33: Stirnplatte
- 34: T-förmiger Fuß
- 35: Wand
- 36: Schraubenfeder
- 37: Kragen
- 38: Hohlraum
- 40: Kapsel
- 50: Anstechvorrichtung
- 52: Dichtung
- 60: Anstechvorrichtung
- 62: Dichtung
- a: Mittelachse
- b: Längsachse

## Patentansprüche

1. Brühkopf einer Heißgetränkezubereitungseinrichtung für Haushaltszwecke mit einer Brühkammer zur Aufnahme einer Getränkesubstratkapsel (40) aus einem bewegbaren Brühkammerteil (10), um eine Kapsel (40) in die Brühkammer einzusetzen, und einem feststehenden Brühkammerteil (11), mit einer Anstechvorrichtung (50; 60) für die Kapsel (40) in einem ersten Brühkammerteil (11) und mit einem mit der Anstechvorrichtung (50; 60) zusammenwirkenden Stößel (16; 26) im anderen, dem zweiten Brühkammerteil (10) als Widerlager der Kapsel (50) beim Anstechen, **dadurch gekennzeichnet, dass** der Stößel (16; 26) gegenüber dem zweiten Brühkammerteil (10) verstellbar ist.

2. Brühkopf nach Anspruch 1, **gekennzeichnet durch** eine erste Anstechvorrichtung (60) als Fluideinlass in die Kapsel (40) und eine zweite Anstechvorrichtung (50) als Fluidauslass im ersten Brühkammerteil (11) und durch jeweils einen korrespondierenden Stößel (26;16) im zweiten Brühkammerteil (10).

3. Brühkopf nach Anspruch 1 oder 2, **dadurch gekennzeichnet, dass** der Stößel (16; 26) am zweiten Brühkammerteil (10) schwimmend gelagert ist.

4. Brühkopf nach Anspruch 3, **gekennzeichnet durch** eine schwimmende Lagerung des Stößels (16; 26) in einer Druckrichtung.

5. Brühkopf nach Anspruch 3, **gekennzeichnet durch** eine schwimmende Lagerung des Stößels in einer Kipprichtung.

6. Brühkopf nach Anspruch 3 bis 5, **gekennzeichnet durch** eine elastische Lagerung des Stößels (16; 26) im zweiten Brühkammerteil (10).

7. Brühkopf nach Anspruch 1 oder 2, **gekennzeichnet durch** eine benutzerseitige Verstellbarkeit des Stößels.

8. Brühkopf nach Anspruch 7, **gekennzeichnet durch** eine Verschraubung als verstellbare Halterung des Stößels im zweiten Brühkammerteil.

9. Brühkopf nach Anspruch 7, **gekennzeichnet durch** eine Klemmung als verstellbare Halterung des Stößels im zweiten Brühkammerteil.

10. Kapselmaschine zur Zubereitung von Heißgetränken für Haushaltszwecke mit einem Brühkopf nach einem der obigen Ansprüche

## Claims

1. Brewing head in a hot beverage preparation device for household use having a brewing chamber for receiving a beverage substrate capsule (40) from a movable brewing chamber part (10), in order to insert a capsule (40) into the brewing chamber, and a stationary brewing chamber part (11), with a piercing apparatus (50; 60) for the capsule (40) in a first brewing chamber part (11) and having a plunger (16; 26) which interacts with the piercing apparatus (50; 60) in the other, second brewing chamber part (10) as a thrust bearing of the capsule (50) during piercing, **characterised in that** the plunger (16; 26) can be adjusted relative to the second brewing chamber part (10).

2. Brewing head according to claim 1, **characterised by** a first piercing apparatus (60) as a fluid inlet into the capsule (40) and a second piercing apparatus (50) as a fluid outlet in the first brewing chamber part (11) and by in each case a corresponding plunger (26; 16) in the second brewing chamber part (10).

3. Brewing head according to claim 1 or 2, **characterised in that** the plunger (16; 26) is float-mounted on the second brewing chamber part (10).

4. Brewing head according to claim 3, **characterised by** a floating mounting of the plunger (16; 26) in a pressure direction.

5. Brewing head according to claim 3, **characterised by** a floating mounting of the plunger in a tilting direction.

6. Brewing head according to claim 3 to 5, **characterised by** an elastic mounting of the plunger (16; 26) in the second brewing chamber part (10).

7. Brewing head according to claim 1 or 2, **characterised by** the plunger being adjustable by the user.

8. Brewing head according to claim 7, **characterised by** a screw connection as an adjustable support of the plunger in the second brewing chamber part.

9. Brewing head according to claim 7, **characterised by** a clamp connection as an adjustable support of the plunger in the second brewing chamber part.

10. Capsule machine for preparing hot beverages for household use with a brewing head according to one of the above claims.

## Revendications

1. Tête d'échaudage d'un dispositif de préparation de boissons chaudes à des fins domestiques avec une chambre d'échaudage pour l'accueil d'une capsule à boisson (40) au départ d'une partie de chambre d'échaudage mobile (10), afin de placer une capsule (40) dans la chambre d'échaudage, et une partie de chambre d'échaudage fixe (11), avec un dispositif à percer (50 ; 60) pour la capsule (40) dans une première partie de chambre d'échaudage (11) et avec un poussoir (16 ; 26) coopérant avec le dispositif à percer (50 ; 60) dans l'autre, à savoir la deuxième partie de chambre d'échaudage (10) servant de butée à la capsule (50) lors de la percée, **caractérisée en ce que** le poussoir (16 ; 26) est déplaçable par rapport à la deuxième partie de chambre d'échaudage (10).

2. Tête d'échaudage selon la revendication 1, **caractérisée par** un premier dispositif à percer (60) sous forme d'entrée de fluide dans la capsule (40) et un deuxième dispositif à percer (50) sous forme de sortie de fluide dans la première partie de chambre d'échaudage (11) et par respectivement un poussoir (26 ; 16) correspondant dans la deuxième partie de chambre d'échaudage (10).

3. Tête d'échaudage selon la revendication 1 ou 2, **caractérisée en ce que** le poussoir (16 ; 26) est logé de façon flottante sur la deuxième partie de chambre d'échaudage (10).

4. Tête d'échaudage selon la revendication 3, **caractérisée par** un logement flottant du poussoir (16 ; 26) dans une direction de pression.

5. Tête d'échaudage selon la revendication 3, **caractérisée par** un logement flottant du poussoir dans une direction de basculement.

6. Tête d'échaudage selon la revendication 3 à 5, **caractérisée par** un logement flottant du poussoir (16 ; 26) dans la deuxième partie de chambre d'échaudage (10).

7. Tête d'échaudage selon la revendication 1 ou 2, **caractérisée en ce que** l'utilisateur peut déplacer le poussoir.

8. Tête d'échaudage selon la revendication 7, **caractérisée par** un vissage comme fixation réglable du poussoir dans la deuxième partie de chambre d'échaudage.

9. Tête d'échaudage selon la revendication 7, **caractérisée par** un serrage comme fixation réglable du poussoir dans la deuxième partie de chambre d'échaudage.

10. Machine à capsules pour la préparation de boissons chaudes à des fins domestiques avec une tête d'échaudage selon l'une des revendications précédentes.
